# EUROPEAN PATENT APPLICATION

(11) **EP 4 797 251 A1**
(43) Date of publication of application: **26.08.2026**
(21) Application number: 26158939.4
(22) Date of filing: 17.02.2026
(51) Int. Cl.: G09G 3/3275

(54) **DRIVER AND ELECTRO-OPTICAL DEVICE**

(30) Priority: 19.02.2025 JP 2025024860
(71) Applicant: Seiko Epson Corporation, Tokyo 160-8801 (JP)
(72) Inventor: MORITA, Akira, Suwa-shi, 392-8502 (JP); BANSHO, Ryota, Suwa-shi, 392-8502 (JP)
(74) Representative: Lewis Silkin LLP

(57) **Abstract**

A driver includes a pixel drive circuit configured to drive a pixel of an electro-optical panel by an output voltage corresponding to gradation data via an output terminal TQj, a pre-charge switch SWP having one end electrically coupled to the output terminal TQj, a plurality of pre-charge capacitors CP1 to CP8, each having one end electrically coupled to the other end of the pre-charge switch SWP, a pre-charge capacitor drive circuit configured to drive the other end of each of the pre-charge capacitors based on pre-charge data, and a control circuit configured to output the pre-charge data to the pre-charge capacitor drive circuit. During a pre-charge period, the control circuit turns on the pre-charge switch SWP, and sets the pre-charge data to predetermined data in which the signal supply line becomes a pre-charge voltage.

## Description

The present application is based on, and claims priority from JP Application Serial Number 2025-024860, filed February 19, 2025, the disclosure of which is hereby incorporated by reference herein in its entirety.

### BACKGROUND

### 1. Technical Field

The present disclosure relates to a driver, an electro-optical device, and the like.

### 2. Related Art

JP-A-2016-80805 discloses a driver that capacitively drives an electro-optical panel. The driver disclosed in JP-A-2016-80805 includes a capacitor circuit coupled to a data voltage output terminal, a capacitor drive circuit that drives the capacitor circuit, and a variable capacitance circuit coupled to the data voltage output terminal. A capacitance of the variable capacitance circuit is set such that a capacitance obtained by adding the capacitance of the variable capacitance circuit and an electro-optical panel-side capacitance and a capacitance of the capacitor circuit have a given capacitance ratio relationship.

JP-A-2016-80805 is an example of the related art.

In driving an electro-optical panel, in order to improve display quality, a pre-charge voltage is applied to a data line before data is written to a pixel. Since a driving time of one line is shortened along with high definition or a high frame rate of the electro-optical panel, it is necessary to perform pre-charge in a short time, and there is a problem in that it is desired to speed up the pre-charge. For example, when negative polarity pre-charge is performed during a positive polarity drive period of polarity inversion driving, it takes the longest time to perform the pre-charge, but there is a problem that it is desired to speed up the pre-charge.

### SUMMARY

An aspect of the present disclosure relates to a driver including: a pixel drive circuit configured to drive a pixel of an electro-optical panel by an output voltage corresponding to gradation data via an output terminal; a pre-charge switch having one end electrically coupled to the output terminal; a plurality of pre-charge capacitors, each having one end electrically coupled to the other end of the pre-charge switch; a pre-charge capacitor drive circuit configured to drive the other end of each of the pre-charge capacitors based on pre-charge data; and a control circuit configured to output the pre-charge data to the pre-charge capacitor drive circuit, in which during a pre-charge period during which a signal supply line and a plurality of data lines of the electro-optical panel are pre-charged, the control circuit turns on the pre-charge switch, and sets the pre-charge data to predetermined data in which the signal supply line becomes a pre-charge voltage.

Another aspect of the present disclosure relates to an electro-optical device including the driver described above and the electro-optical panel.

### BRIEF DESCRIPTION OF THE DRAWINGS

FIG. 1 is a configuration example of an electro-optical device.
FIG. 2 is a detailed configuration example of a driver and a configuration example of a display system including the driver.
FIG. 3 is a first detailed configuration example of a pre-charge circuit.
FIG. 4 is a first signal waveform example illustrating an operation of the driver during a horizontal scanning period.
FIG. 5 is a detailed configuration example of an electro-optical panel.
FIG. 6 is an example of parameters of the driver.
FIG. 7 is a calculation example of parameters related to pre-charge.
FIG. 8 is a detailed configuration example of a pixel drive circuit and a variable capacitance circuit.
FIG. 9 is a diagram illustrating correspondence among gradation data, capacitive drive data, and a data voltage.
FIG. 10 is a second detailed configuration example of the pre-charge circuit.
FIG. 11 is a third detailed configuration example of the pre-charge circuit.
FIG. 12 is a second signal waveform example illustrating the operation of the driver during the horizontal scanning period.
FIG. 13 illustrates a third signal waveform example illustrating the operation of the driver during the horizontal scanning period.
FIG. 14 is a diagram illustrating a charge error due to a pixel capacitance.
FIG. 15 is a signal waveform example in a current frame under positive polarity driving.
FIG. 16 is a detailed configuration example of a processing circuit when the driver performs correction processing.
FIG. 17 is a diagram illustrating conversion performed by a converter.
FIG. 18 is a calculation example of a correction coefficient.
FIG. 19 is an example of gradation values of gradation data in a previous frame.
FIG. 20 is a calculation example of a correction value in the current frame.
FIG. 21 is an example of gradation values corrected by correction data in the current frame.
FIG. 22 is a diagram illustrating pre-charge when correcting a charge error due to a pixel capacitance.
FIG. 23 is a configuration example of an electronic apparatus.

### DESCRIPTION OF EMBODIMENTS

Hereinafter, preferred embodiments of the present disclosure will be described in detail. The present embodiment to be described does not unduly limit the description in What is claimed is and not all of the configurations described in the present embodiment are necessarily essential component elements. Note that coupling in the present embodiment includes electrical coupling. The electrical coupling is coupling in which an electrical signal, a voltage, or a current can be transmitted, and includes coupling in which information can be transmitted by the electrical signal. The electrical coupling may be coupling via a passive element or an active element.

### 1. Electro-Optical Device

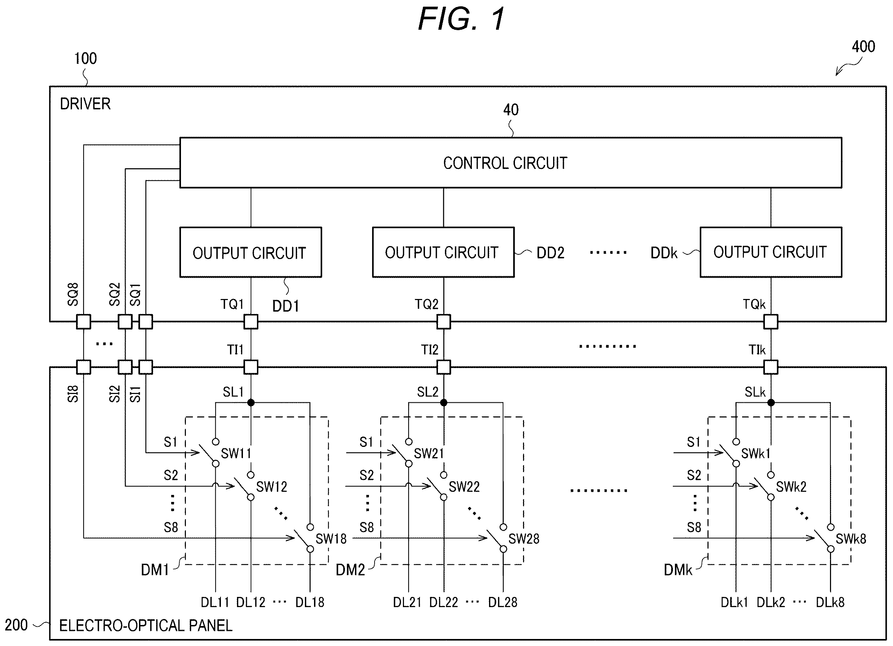

FIG. 1 is a configuration example of an electro-optical device 400. The electro-optical device 400 includes a driver 100 and an electro-optical panel 200. Hereinafter, the electro-optical device 400 of a demultiplex driving type will be described as an example, but the electro-optical device 400 is not limited thereto, and may be of a phase expansion driving type, for example. Further, although an example in which the number of demultiplexes is 8 will be described below, the number of demultiplexes may be p. p is an integer of 2 or more.

The driver 100 includes a control circuit 40, output circuits DD1 to DDk, output terminals TQ1 to TQk, and control signal output terminals SQ1 to SQ8. k is an integer of 2 or more. The driver 100 is, for example, an integrated circuit device in which multiple circuit elements are integrated in a semiconductor substrate. The output terminals TQ1 to TQk are, for example, pads provided on the semiconductor substrate, lead terminals or bump terminals provided in a package of the integrated circuit device, or the like.

The electro-optical panel 200 includes input terminals TI1 to Tlk, signal supply lines SL1 to SLk, demultiplexers DM1 to DMk, data lines DL11 to DL18, DL21 to DL28, ..., DLk1 to DLk8, and control signal input terminals SI1 to SI8. The electro-optical panel 200 is an active matrix liquid crystal display panel, an EL display panel using a self-luminous element, or the like. EL is an abbreviation for Electro-Luminescence.

The control circuit 40 outputs the corresponding gradation data to the output circuit DD1. The output circuit DD1 converts the gradation data into a data voltage and outputs the data voltage to the output terminal TQ1. The output terminal TQ1 is coupled to the input terminal TI1, and the input terminal TI1 is coupled to the signal supply line SL1. The output circuits DD2 to DDk, the output terminals TQ2 to TQk, the input terminals TI2 to Tlk, and the signal supply lines SL2 to SLk are configured in the same manner.

The demultiplexer DM1 includes switches SW11 to SW18. Each switch is, for example, a TFT. TFT is an abbreviation for Thin Film Transistor. One end of the switch SW11 is coupled to the signal supply line SL1, and the other end is coupled to the data line DL11. The switch SW11 is controlled to be turned on or off by a control signal S1. Similarly, one end of each of the switches SW12 to SW18 is coupled to the signal supply line SL1, and the other end of the switches SW12 to SW18 are coupled to the data lines DL12 to DL18. The switches SW12 to SW18 are controlled to be turned on or off by control signals S2 to S8. The demultiplexers DM2 to DMk, the switches SW21 to SW28, ..., SWk1 to SWk8, and the data lines DL21 to DL28, ..., DLk1 to DLk8 are configured in the same manner. The number of switches and the number of data lines in each demultiplexer may be p, which is the same as the number of demultiplexes.

Although not illustrated in FIG. 1, a plurality of pixels are arranged in a matrix in the electro-optical panel 200. One data line and one scanning line are coupled to each pixel. The scanning line is selected by a scanning line drive circuit (not illustrated). The scanning line drive circuit may be provided in the driver 100 or may be provided outside the driver 100.

Demultiplex driving will be described by taking the output circuit DD1 as an example. During one horizontal scanning period, the switches SW11, SW12, ..., SW18 are sequentially turned on. When the switch SW11 is turned on, the output circuit DD1 writes the data voltage to the pixel coupled to the data line DL11. Similarly, when the switches SW12, ..., SW18 are turned on, the output circuit DD1 writes the data voltage to the pixels coupled to the data lines DL12, ..., DL18. Rotation or the like may be performed in the demultiplex driving, and the switches SW11, SW12, ..., and SW18 may be turned on in any order. The data voltage is a voltage written to one pixel at one time. Eight pixels are driven in time series by the demultiplex driving, and a data voltage for each pixel is output to the signal supply line as a time-series signal. This signal is referred to as a data signal. During the horizontal scanning period, pre-charge, post-charge, or both may be performed in addition to the driving of the pixels.

### 2. Detailed Configuration Example of Driver

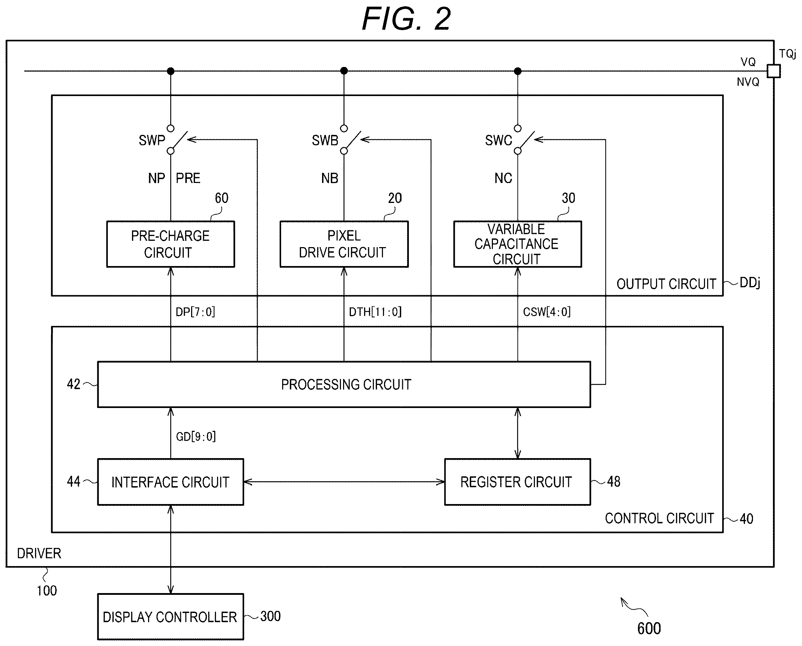

FIG. 2 is a detailed configuration example of the driver 100 and a configuration example of a display system 600 including the driver 100. An output circuit DDj illustrated in FIG. 2 is any one of the output circuits DD1 to DDk. j is an integer of 1 or more and k or less. The display system 600 includes a display controller 300 and the driver 100. The driver 100 includes the output circuit DDj and the control circuit 40. The output circuit DDj includes a pixel drive circuit 50, a variable capacitance circuit 30, a pre-charge circuit 60, a drive switch SWB, a balance switch SWC, and a pre-charge switch SWP. The control circuit 40 includes a processing circuit 42, an interface circuit 44, and a register circuit 48.

The interface circuit 44 performs interface processing between the display controller 300 that controls the driver 100 and the driver 100. The interface circuit 44 outputs gradation data GD[9:0] received from the display controller 300 to the processing circuit 42. The number of bits of the received gradation data may be any. The interface circuit 44 is, for example, an image interface circuit of an LVDS system, a parallel RGB system, a display port system, or the like. LVDS is an abbreviation for Low Voltage Differential Signaling.

One end of the drive switch SWB is coupled to an output node NVQ of the output circuit DDj, and the other end thereof is coupled to an output node NB of the pixel drive circuit 50. The output node NVQ is coupled to an output terminal TQj. One end of the balance switch SWC is coupled to the output node NVQ of the output circuit DDj, and the other end thereof is coupled to an output node NC of the variable capacitance circuit 30.

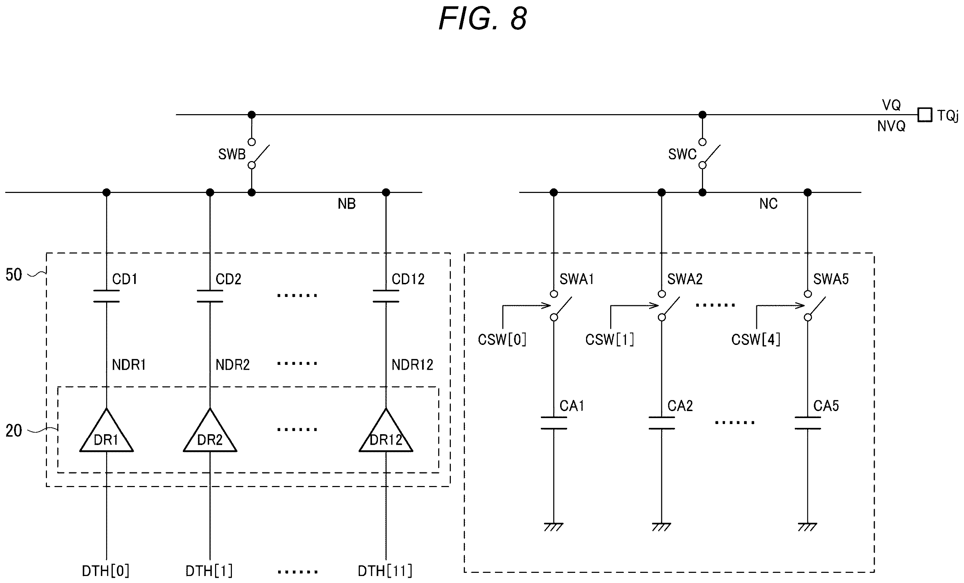

The processing circuit 42 turns on the drive switch SWB and the balance switch SWC during a pixel drive period, and outputs the capacitive drive data DTH[11:0] to the pixel drive circuit 50 based on the gradation data GD[9:0]. The pixel drive circuit 50 outputs an output voltage VQ as a data voltage based on the capacitive drive data DTH[11:0]. Specifically, as will be described later with reference to FIG. 8, the pixel drive circuit 50 includes capacitors CD1 to CD12 and a capacitor drive circuit 20. The capacitor drive circuit 20 drives the capacitors CD1 to CD12 based on the capacitive drive data DTH[11:0]. Accordingly, charge is injected from the capacitors CD1 to CD12 to the output node NVQ, or charge is discharged from the output node NVQ to the capacitors CD1 to CD12. The charge transfer is redistributed to the variable capacitance circuit 30 and an internal capacitance of the electro-optical panel 200, so that the output voltage VQ at the output node NVQ becomes a data voltage corresponding to the capacitive drive data DTH[11:0]. Such driving is referred to as capacitive driving. A relationship among the gradation data GD[9:0], the capacitive drive data DTH[11:0], and the data voltage will be described later.

One end of the pre-charge switch SWP is coupled to the output node NVQ of the output circuit DDj, and the other end thereof is coupled to an output node NP of the pre-charge circuit 60. A voltage at the output node NP is referred to as a pre-charge node voltage PRE.

During a pre-charge period, the processing circuit 42 turns on the pre-charge switch SWP and outputs pre-charge data DP[7:0] to the pre-charge circuit 60. The pre-charge circuit 60 supplies the charge to the output node NVQ or discharges the charge from the output node NVQ based on the pre-charge data DP[7:0] so that the output voltage VQ at the output node NVQ becomes a desired pre-charge voltage.

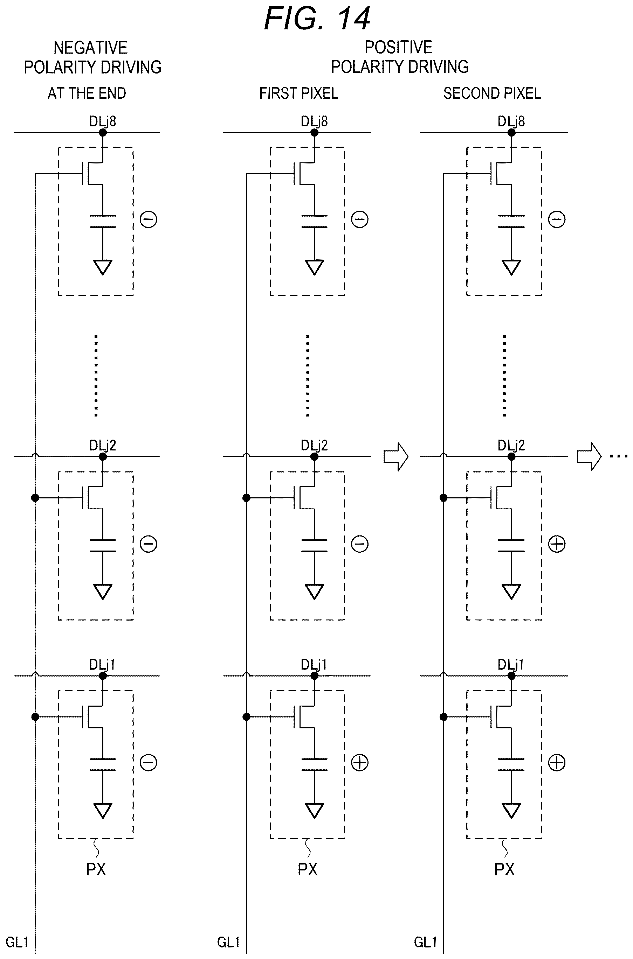

The register circuit 48 stores various data for setting an operation of the driver 100. For example, when some correction such as correction to be described later in FIG. 14 and subsequent figures is performed, the register circuit 48 stores parameters used for the correction. Alternatively, the register circuit 48 stores setting data CSW[4:0] for setting a capacitance value of the variable capacitance circuit 30. For example, the display controller 300 writes a correction parameter and the setting data CSW[4:0] to the register circuit 48 via the interface circuit 44. Alternatively, the driver 100 may include a nonvolatile memory (not illustrated) that stores the correction parameter and the setting data CSW[4:0] in advance, and the correction coefficient and the setting data CSW[4:0] may be loaded from the nonvolatile memory to the register circuit 48. The processing circuit 42 performs the correction using the correction parameter read from the register circuit 48. The processing circuit 42 sets the capacitance value of the variable capacitance circuit 30 by outputting the setting data CSW[4:0] read from the register circuit 48 to the variable capacitance circuit 30.

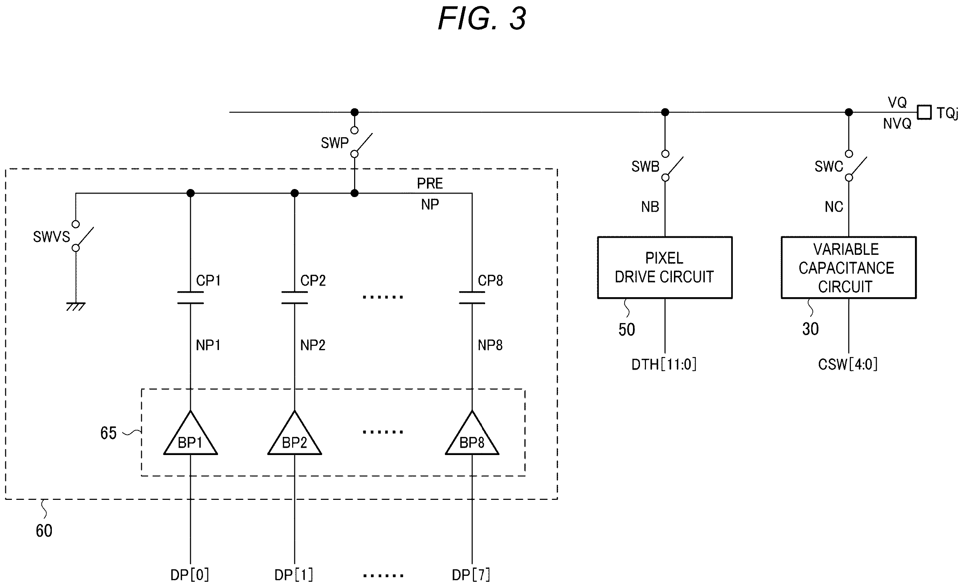

FIG. 3 is a first detailed configuration example of the pre-charge circuit 60. The pre-charge circuit 60 includes pre-charge capacitors CP1 to CP8, a pre-charge capacitor drive circuit 65, and an initialization switch SWVS. The pre-charge capacitor drive circuit 65 includes pre-charge drive circuits BP1 to BP8. The number of pre-charge capacitors and drive circuits is not limited to eight, and may be r. r is an integer of 2 or more. The number of bits of the pre-charge data may be r, which is the same as the number of pre-charge capacitors.

One end of the pre-charge capacitor CP1 is coupled to the output node NP of the pre-charge circuit 60, and the other end thereof is coupled to a node NP1. The drive circuit BP1 outputs a low-level or high-level voltage corresponding to a bit DP[0] of the pre-charge data DP[7:0] to the node NP1. Hereinafter, the drive circuit BP1 outputs a low-level voltage when DP[0] is 0, and outputs a high-level voltage when DP[0] is 1. The high-level voltage is a power supply voltage, and the low-level voltage is a ground voltage.

Similarly, one end of each of the pre-charge capacitors CP2 to CP8 is coupled to the output node NP of the pre-charge circuit 60, and the other ends of the pre-charge capacitors CP2 to CP8 are respectively coupled to the nodes NP2 to NP8. The drive circuits BP2 to BP8 output the low-level or high-level voltage corresponding to bits DP[1] to DP[7] of the pre-charge data DP[7:0] to the node NP2 to NP8. Hereinafter, it is assumed that the drive circuits BP2 to BP8 output the low-level voltages when DP[1] to DP[7] are 0, and output high-level voltages when DP[1] to DP[7] are 1.

The capacitance values of the pre-charge capacitors CP1 to CP8 are weighted in binary. That is, a capacitance ratio of the pre-charge capacitors CP1 to CP8 is CP1: CP2: CP3: ...: CP8 = 1: 2¹: 2²: ...: 2⁷. Each of the drive circuits BP1 to BP8 includes, for example, a level shifter that level-shifts an input logic level to an output voltage level, and a buffer circuit that buffers an output of the level shifter.

One end of the initialization switch SWVS is coupled to the output node NP of the pre-charge circuit 60, and the other end thereof is coupled to a ground node. A ground voltage is supplied to the ground node from the outside of a power supply circuit (not illustrated) or the driver 100. When the processing circuit 42 of the control circuit 40 turns on the initialization switch SWVS, the output node NP becomes the ground voltage. As a result, the charge of the pre-charge capacitors CP1 to CP8 is initialized. This initialization is performed, for example, during the pixel drive period. The initialization switch SWVS is an analog switch such as an N-type MOS transistor. uA current capability of the initialization switch SWVS is set such that the initialization is performed over a time sufficiently longer than a pre-charge time.

In the present embodiment, the pre-charge circuit 60 using the capacitor as described above pre-charges the signal supply line and the data line by charge redistribution. This makes it possible to perform pre-charge at a higher speed than pre-charge using an amplifier, a resistive divider circuit, or the like in the related art.

Hereinafter, an operation example of the driver 100 will be described using the positive polarity drive period of polarity inversion driving as an example. Although the positive polarity drive period is taken as an example because a charge transfer amount in the pre-charge is large, the pre-charge can be performed by the same method during a negative polarity drive period.

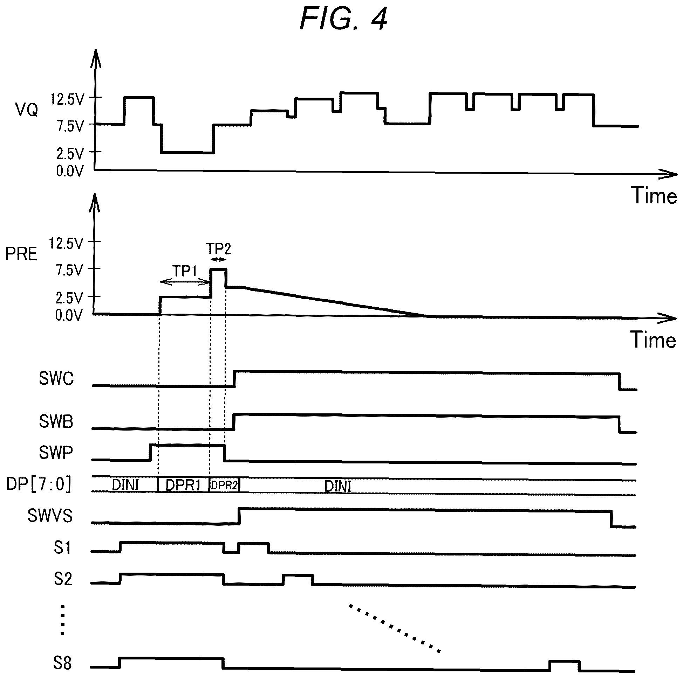

FIG. 4 is a first signal waveform example illustrating the operation of the driver 100 during the horizontal scanning period. In a signal waveform of the switch, a high level means on, and a low level means off.

At the beginning of the horizontal scanning period, the processing circuit 42 turns off the balance switch SWC, the drive switch SWB, the pre-charge switch SWP, the initialization switch SWVS, and the control signals S1 to S8 of the switches of the demultiplexer. The processing circuit 42 outputs initial value data DINI as the pre-charge data DP[7:0]. The pre-charge node voltage PRE is initialized to 0 V during a previous horizontal scanning period. The voltage VQ of the signal supply line is 7.5 V due to the post-charge during the previous horizontal scanning period. The voltage of the data line is the data voltage written during the previous horizontal scanning period.

Next, the processing circuit 42 turns on the control signals S1 to S8 of the switches of the demultiplexer. The signal supply line and the data line are coupled, and the voltage VQ of the signal supply line and the voltage of the data line become the same. This voltage is determined by the charge redistribution between the signal supply line and the data line.

Next, the processing circuit 42 turns on the pre-charge switch SWP. A period during which the pre-charge switch SWP is on is referred to as the pre-charge period. The signal supply line, the data line, and the output node NP of the pre-charge circuit 60 are coupled, and the voltage VQ of the signal supply line, the voltage of the data line, and the pre-charge node voltage PRE become the same. This voltage is determined by the charge redistribution between the signal supply line, the data line, and the output node NP of the pre-charge circuit 60. As described above, the pre-charge is speeded up by using the charge redistribution.

At least some bits of the initial value data DINI = DP[7:0] are at a high level. That is, at least some of the pre-charge drive circuits BP1 to BP8 output a high level. For example, when the drive circuit BP1 outputs a high level, the drive circuit BP1 receives and outputs the charge from and to a power supply node. Accordingly, at least a part of the charge transferred in the charge redistribution can flow to the power supply node instead of the ground node, and fluctuation of the ground voltage in the pre-charge can be reduced. Since the pre-charge is performed within a limited time, high-speed charge transfer is required, and large noise is generated in the ground voltage, but in the present embodiment, the noise of the ground voltage is reduced. For example, although a communication malfunction of the interface circuit 44 may occur due to noise of the ground voltage, the malfunction of the circuit is prevented by reducing the noise. The power supply node is a node to which a power supply voltage is supplied from a power supply circuit (not illustrated) or the outside of the driver 100.

As illustrated in FIG. 4, a period during which the pre-charge is performed with a negative voltage of 2.5 V is referred to as a first pre-charge period TP1, and a period during which the pre-charge is performed with a common voltage of 7.5 V is referred to as a second pre-charge period TP2.

The processing circuit 42 outputs predetermined data DPR1 as the pre-charge data DP[7:0] during the first pre-charge period TP1. A value of the predetermined data DPR1 is smaller than the value of the initial value data DINI. Accordingly, the pre-charge circuit 60 lowers the output voltage VQ by discharging the charge from the signal supply line or the like. The predetermined data DPR1 is set such that the output voltage VQ becomes the pre-charge voltage of 2.5 V.

At least some bits of the predetermined data DPR1 = DP[7:0] are at a high level. Accordingly, as described above, at least a part of the charge transferred in the charge redistribution can flow to the power supply node instead of the ground node, and the fluctuation of the ground voltage in the pre-charge can be reduced.

Next, the processing circuit 42 sets the pre-charge data DP[7:0] to predetermined data DPR2 at the start of the second pre-charge period TP2. A value of the predetermined data DPR2 is larger than the value of the predetermined data DPR1. Accordingly, the pre-charge circuit 60 increases the output voltage VQ by supplying the charge to the signal supply line or the like. The predetermined data DPR2 is set such that the output voltage VQ becomes the pre-charge voltage of 7.5 V.

Next, the processing circuit 42 turns off the pre-charge switch SWP. After the pre-charge period ends, the pixel drive period during which the pixel drive circuit 50 drives the pixels with the data voltage starts. The processing circuit 42 turns on the drive switch SWB and the balance switch SWC. The processing circuit 42 sequentially turns on the control signals S1 to S8 of the switches of the demultiplexer, and outputs the capacitive drive data DTH[11:0] corresponding to the data line coupled to the turned-on switch to the pixel drive circuit 50. The pixel drive circuit 50 changes the output voltage VQ based on the capacitive drive data DTH[11:0] and writes the data voltage to the pixel.

After turning on the drive switch SWB and the balance switch SWC, the processing circuit 42 turns on the initialization switch SWVS and outputs the initial value data DINI as the pre-charge data DP[7:0]. The output node NP of the pre-charge circuit 60 is coupled to the ground node via the initialization switch SWVS, and the charge of the pre-charge capacitors CP1 to CP8 is gradually discharged to the ground node, so that the pre-charge node voltage PRE gradually approaches 0 V. The current capability of the initialization switch SWVS is set, for example, such that time constant of charge discharge is longer than the pre-charge period. As a result, the charge is discharged to the ground node over time, and noise due to an increase in the ground voltage is reduced. During the pre-charge period, as described above, the pre-charge is performed using the charge transfer to the power supply node, and when the pre-charge period ends and there is a time margin, the charge is released to the ground node to reduce the noise of the ground voltage.

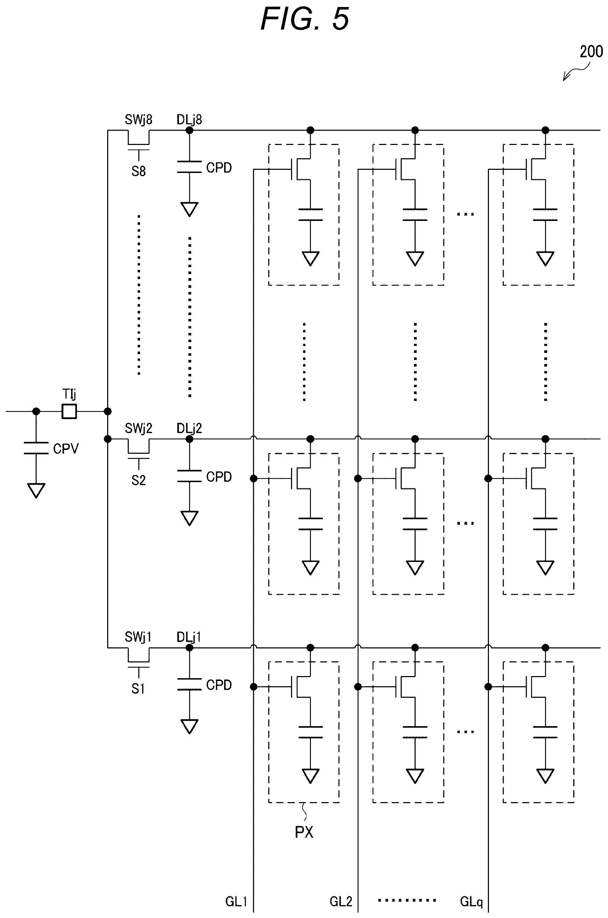

Hereinafter, a calculation example of parameters related to the pre-charge will be described. First, FIG. 5 illustrates a detailed configuration example of the electro-optical panel 200. Hereinafter, a portion related to the demultiplexer DMj will be illustrated and described as an example.

The electro-optical panel 200 includes an input terminal Tlj, switches SWj1 to SWj8 of the demultiplexer DMj, data lines DLj1 to DLj8, scanning lines GL1 to GLm, and a plurality of pixels PX arranged in a matrix. Note that a capacitance CPV and capacitances CPD are parasitic capacitances and do not exist as circuit elements.

The pixel PX includes a pixel transistor and a pixel capacitance. When the electro-optical panel 200 is a liquid crystal display panel, the pixel capacitance includes a liquid crystal and two electrodes disposed to face each other with the liquid crystal interposed therebetween. A source of the pixel transistor is coupled to the data line, a gate thereof is coupled to the scanning line, and a drain thereof is coupled to one end of the pixel capacitance. The other end of the pixel capacitance is coupled to the ground. The parasitic capacitance CPV is a parasitic capacitance when the electro-optical panel 200 is viewed from the output terminal TQj of the driver 100, and includes a parasitic capacitance of a wiring coupling the output terminal TQj of the driver 100 and the input terminal Tlj of the electro-optical panel 200, and a parasitic capacitance of the signal supply line SLj in the electro-optical panel 200. The parasitic capacitance CPD is a parasitic capacitance of one data line.

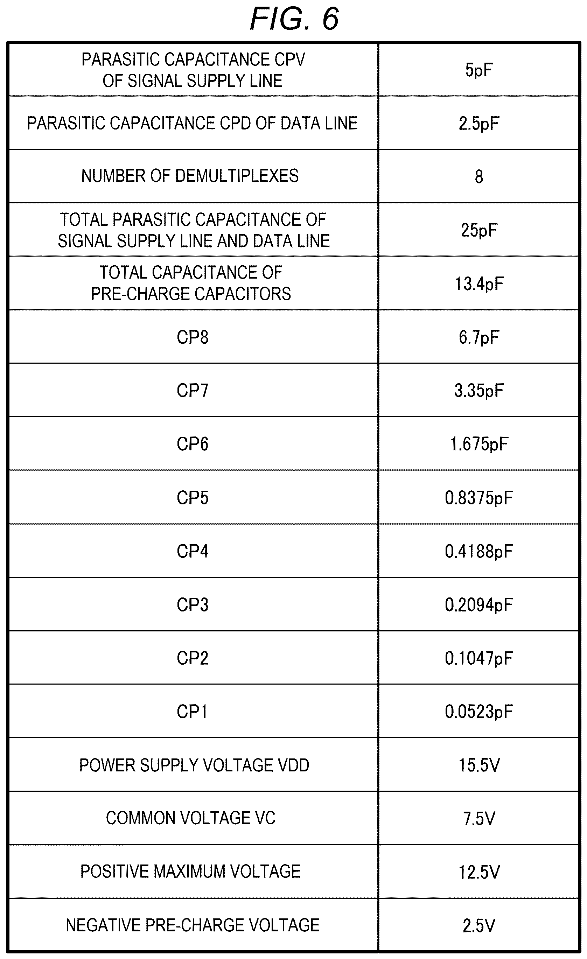

FIG. 6 is an example of parameters of the driver 100. The "total parasitic capacitance of the signal supply line and the data line" is calculated by CPV + CPD × (the number of demultiplexes). The "total capacitance of the pre-charge capacitors" is the sum of the capacitance values of the pre-charge capacitors CP1 to CP8.

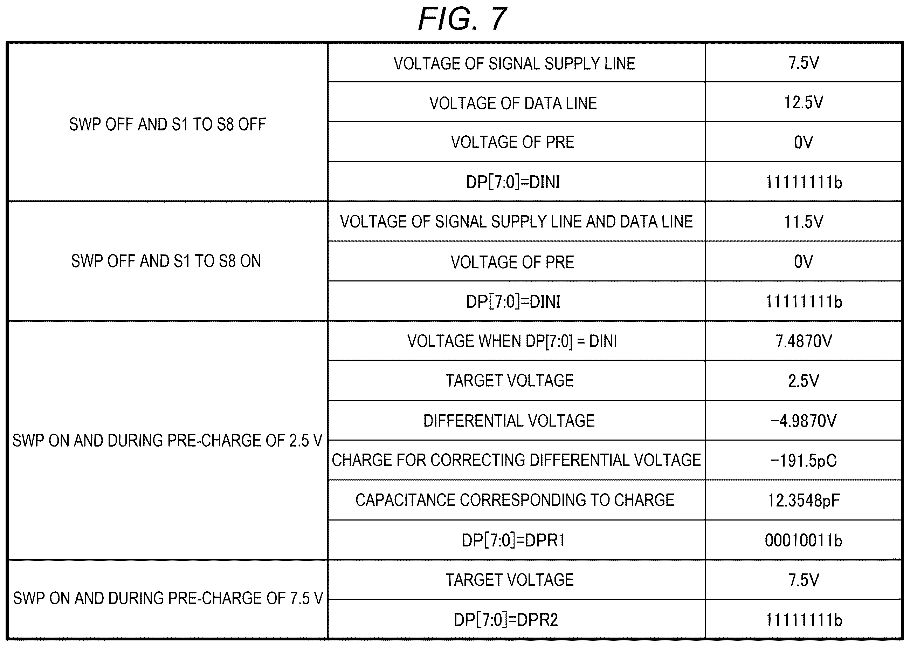

FIG. 7 is a calculation example of parameters related to the pre-charge on the premise of the parameters of FIG. 6. At the beginning of the horizontal scanning period, the pre-charge switch SWP is turned off, and the control signals S1 to S8 of the demultiplexer are all turned off. It is assumed that 12.5 V is written to all the eight data lines during the previous horizontal scanning period. The pre-charge data DP[7:0] is the initial value data DINI, and as an example, it is assumed that all bits are "1". "b" at the end of the numerical value means a binary number.

When the pre-charge switch SWP is turned off and the control signals S1 to S8 of the demultiplexer are all turned on, the voltages of the signal supply line and the data line are (7.5 V × 5 pF + 12.5 V × 2.5 pF × 8)/25 pF = 11.5 V.

After the pre-charge switch SWP is turned on, when the pre-charge data DP[7:0] is the initial value data DINI, the voltage of the signal supply line, the data line, and the output node NP of the pre-charge circuit 60 becomes (7.5 V × 5 pF + 12.5 V × 2.5 pF × 8 + 0 V × 13.4 pF)/(25 pF + 13.4 pF) = 7.4870 V.

When the pre-charge data DP[7:0] becomes the predetermined data DPR1, the pre-charge of 2.5 V is started. A difference between the target voltage and the voltage of the signal supply line or the like is 2.5 V - 7.4870 V = -4.9870 V. The charge required to correct this differential voltage is -4.9870 V × (25 pF + 13.4 pF) = -191.5 pC. The capacitance to be moved by the pre-charge circuit 60 corresponding to this charge is 191.5 pC/15.5 V = 12.3548 pF. When this is converted into the predetermined data DPR1, DPR1 = 00010011b. That is, when the pre-charge data DP[7:0] changes from 11111111b to 00010011b, the charge of 191.5 pC is discharged from the signal supply line or the like, and the voltage of the signal supply line or the like becomes 2.5 V. Since 2.5 V is realized by the difference between DINI and DPR1, DINI and DPR1 are not limited to the above numerical values as long as the difference is maintained.

At the time of the pre-charge of 7.5 V, the pre-charge data DP[7:0] becomes the predetermined data DPR2. In this example, DPR2 = DINI, but this is because about 7.5 V is output when SWP is turned on and DP[7:0] = DINI. When a voltage other than about 7.5 V is output when SWP is turned on and DP[7:0] = DINI, DPR2 may be set such that the voltage of the signal supply line or the like is 7.5 V unlike DINI.

A configuration and an operation of capacitive driving will be described below. FIG. 8 is a detailed configuration example of the pixel drive circuit 50 and the variable capacitance circuit 30. The pixel drive circuit 50 includes the capacitors CD1 to CD12 and the capacitor drive circuit 20. The capacitor drive circuit 20 includes drive circuits DR1 to DR12. The number of capacitors and drive circuits may be n. n is an integer of 2 or more. The number of bits of the capacitive drive data DTH[11:0] is the same as that of the capacitor or the like, and may be n.

One end of the capacitor CDi is coupled to the node NB, and the other end thereof is coupled to a capacitor drive node NDRi. i is an integer of 1 or more and 12 or less. Capacitance values of the capacitors CD1 to CD12 are weighted in binary. Specifically, the capacitance value of the capacitor CDi is 2⁽ⁱ⁻¹⁾ × CD1.

The processing circuit 42 outputs an i-th bit DTH[i-1] of the capacitive drive data DTH[11:0] to the input node of the drive circuit DRi. The drive circuit DRi outputs a capacitor drive voltage corresponding to a logic level of the i-th bit DTH[i-1] to the capacitor drive node NDRi. That is, the drive circuit DRi outputs a first voltage level to the capacitor drive node NDRi when the bit DTH[i-1] is a first logic level, and outputs a second voltage level to the capacitor drive node NDRi when the bit DTH[i-1] is a second logic level. For example, the first logic level is "0", the second logic level is "1", the first voltage level is the ground voltage, and the second voltage level is the power supply voltage. The drive circuit DRi includes, for example, a level shifter that level-shifts an input logic level to an output voltage level of the drive circuit DRi, and a buffer circuit that buffers an output of the level shifter.

When the drive switch SWB and the balance switch SWC are turned on, the drive circuits DR1 to DR12 drive the capacitors CD1 to CD12, so that the charge redistribution occurs among the capacitors CD1 to CD12, the variable capacitance circuit 30, and an electro-optical panel-side capacitance. As a result, the data voltage is written to the pixel. Note that the electro-optical panel-side capacitance is a capacitance viewed from the output terminal TQj to the panel side at the time of pixel driving, and is specifically a capacitance obtained by adding the parasitic capacitance CPV of the signal supply line and the parasitic capacitance CPD of one data line in FIG. 5.

The variable capacitance circuit 30 includes adjustment switches SWA1 to SWA5 and adjustment capacitors CA1 to CA5. However, the number of switches and adjustment capacitors may be m. m is an integer of 2 or more.

One end of the adjustment switch SWAs is coupled to the node NC, and the other end thereof is coupled to one end of the adjustment capacitor CAs. The other end of the adjustment capacitor CAs is coupled to a low-potential-side power supply. s is an integer of 1 or more and 5 or less. The adjustment switches SWA1 to SWA5 are, for example, P-type MOS transistors, N-type MOS transistors, or transfer gates. The adjustment capacitors CA1 to CA5 have binary-weighted capacitance values. Specifically, the capacitance value of the adjustment capacitor CAs is 2^{(s-1)} × CA1.

The adjustment switch SWAs is controlled to be turned on or off by an s-th bit CSW[s-1] of CSW[4:0]. When the adjustment switch SWAs is turned on, the adjustment capacitor CAs is coupled to the node NC, and the capacitance value of the adjustment capacitor CAs is added to the capacitance value of the variable capacitance circuit 30. That is, the capacitance value of the variable capacitance circuit 30 is set according to a turning-on/off state of the adjustment switches SWA1 to SWA5.

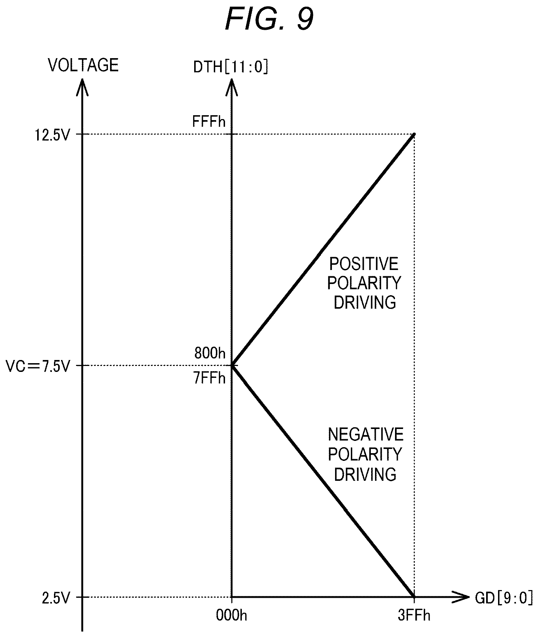

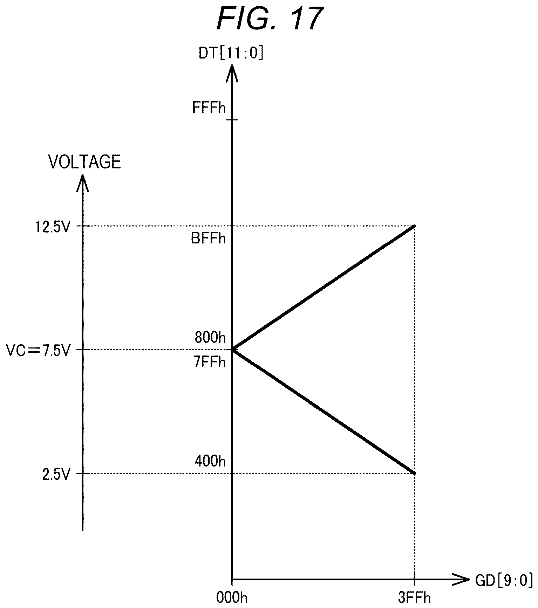

FIG. 9 is a diagram illustrating correspondence among the gradation data GD[9:0], the capacitive drive data DTH[11:0], and the data voltage. Note that the correspondence is an example, and for example, correspondence in consideration of correction to be described later in FIG. 17 may be used.

For the gradation data GD[9:0] = 000h, 001h, 002h, ..., 3FFh, the processing circuit 42 outputs the capacitive drive data DTH[11:0] = 800h, 801h, 802h, ..., FFFh under the positive polarity driving, and outputs the capacitive drive data DTH[11:0] = 7FFh, 7FEh, 7FDh, ..., 000h under the negative polarity driving. "h" at the end of the numerical value indicates that the numerical value is a hexadecimal number. The data voltage output by the output circuit DDj has a linear characteristic with respect to the capacitive drive data DTH[11:0]. The data voltage is within a range of 7.5 V to 12.5 V of 5V amplitude under the positive polarity driving, and is within a range of 7.5 V to 2.5 V of 5V amplitude under the negative polarity driving. VC = 7.5 V is a common voltage in the pixel driving. Although gamma correction processing is not considered in FIG. 9, the processing circuit 42 may convert the gradation data GD[9:0] into the capacitive drive data DTH[11:0] after performing the gamma correction, for example.

A relationship between the capacitance values of the capacitors CD1 to CD12 and the variable capacitance circuit 30 of the pixel drive circuit 50 and the output voltage VQ will be described. The power supply voltage of the drive circuits DR1 to DR12 of the capacitor drive circuit 20 is 15 V. The total capacitance value of the capacitors CD1 to CD12 is denoted by CD, and the capacitance value of the variable capacitance circuit 30 is denoted by CA. A capacitance value on the electro-optical panel side viewed from the output terminal TQj is CLCD. The capacitance value CLCD includes the parasitic capacitance of the wiring coupling the output terminal TQj and the input terminal Tlj, the parasitic capacitance of the signal supply line SLj, and the capacitance value of the parasitic capacitance of one data line. The maximum amplitude of the capacitive driving is expressed as CD/(CD + CA + CLCD) × 15 V. Here, the maximum amplitude of the capacitive driving means the amplitude of the capacitive driving when the capacitive drive data DTH[11:0] changes from 000h to FFFh.

When it is desired to set the maximum amplitude of the capacitive driving to VAM, the capacitance value CA of the variable capacitance circuit 30 is set such that VAM = CD/(CD + CA + CLCD) × 15 V. Since the capacitance values of the capacitors CD1 to CD12 are weighted in binary, the output voltage VQ linearly changes at the voltage amplitude VAM as the capacitive drive data DTH[11:0] changes from 000h to FFFh. For example, when VAM = 10 V and the common voltage VC is 7.5 V, the output voltage VQ changes from 2.5 V to 12.5 V.

The capacitance value CA of the variable capacitance circuit 30 is determined, for example, as follows. A target voltage of the output voltage VQ when certain capacitive drive data DTH[11:0] is input to the capacitor drive circuit 20 is known. Therefore, predetermined capacitive drive data DTH[11:0] may be input to the capacitor drive circuit 20, and the capacitance value CA of the variable capacitance circuit 30 may be determined such that the output voltage VQ at that time becomes the target voltage. For example, the driver 100 may include a monitoring circuit that monitors the output voltage VQ, and the processing circuit 42 may determine the capacitance value CA of the variable capacitance circuit 30 based on a monitoring result. Alternatively, an inspection device may monitor the voltage of the output terminal TQj in an inspection process or the like when manufacturing the electro-optical device 400, and the capacitance value CA of the variable capacitance circuit 30 may be determined based on the monitoring result. Alternatively, the capacitance value CA of the variable capacitance circuit 30 may be determined using a circuit simulation.

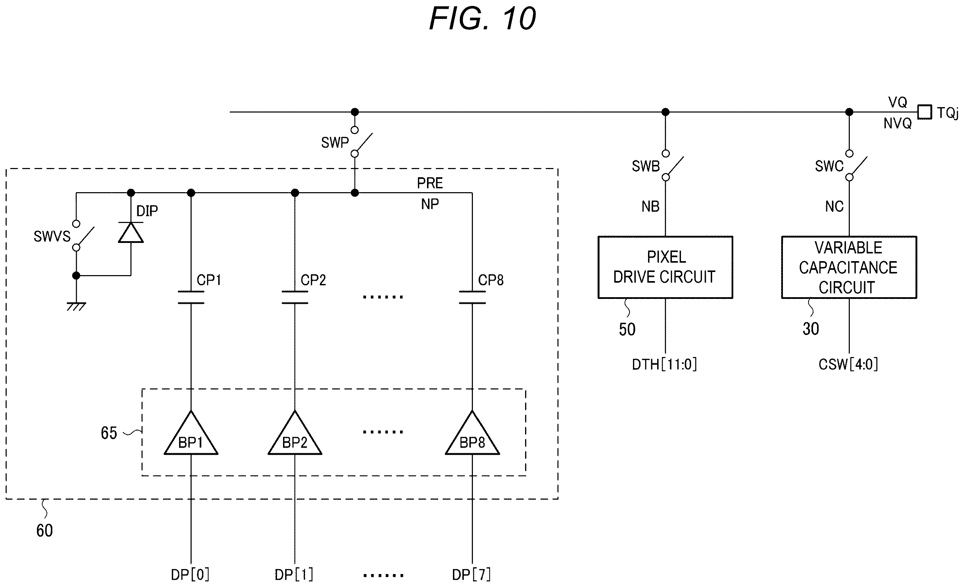

FIG. 10 is a second detailed configuration example of the pre-charge circuit 60. Differences from the first detailed configuration example of FIG. 3 will be described. In this configuration example, the pre-charge circuit 60 further includes a diode DIP. The diode DIP is coupled in parallel to the initialization switch SWVS, has an anode coupled to the ground node, and has a cathode coupled to the output node NP of the pre-charge circuit 60. The diode DIP may be a circuit element different from the initialization switch SWVS. Alternatively, the initialization switch SWVS may be an N-type MOS transistor, and the diode DIP may be a body diode of the N-type MOS transistor.

When the pre-charge node voltage PRE becomes a negative voltage, the pre-charge circuit 60 or the pre-charge switch SWP may fail. For example, since the pre-charge node voltage PRE is initialized to 0 V, the pre-charge node voltage PRE may transiently become a negative voltage when the pre-charge data DP[7:0] is changed thereafter. By providing the diode DIP, the pre-charge node voltage PRE can be clamped, and the pre-charge circuit 60 and the pre-charge switch SWP can be protected.

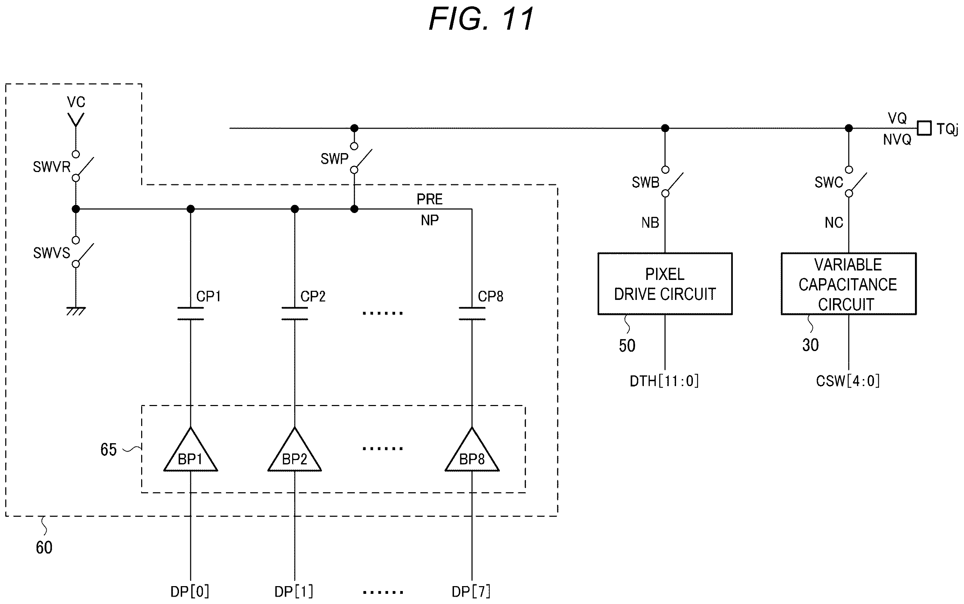

FIG. 11 is a third detailed configuration example of the pre-charge circuit 60. Differences from the first detailed configuration example of FIG. 3 will be described. In this configuration example, the pre-charge circuit 60 further includes an initialization switch SWVR. One end of the initialization switch SWVR is coupled to the output node NP of the pre-charge circuit 60, and the other end thereof is coupled to the node of the common voltage VC. The other end of the initialization switch SWVR may be coupled to the node of the power supply voltage or a node of a reference voltage. The reference voltage may be any voltage between the ground voltage and the power supply voltage, and is supplied from, for example, a voltage generation circuit (not illustrated). Note that the initialization switch SWVR is not limited to initialization as described later, and may be used for pre-charge. Hereinafter, a signal waveform example will be described by taking a case where the other end of the initialization switch SWVR is coupled to the node of the common voltage VC as an example.

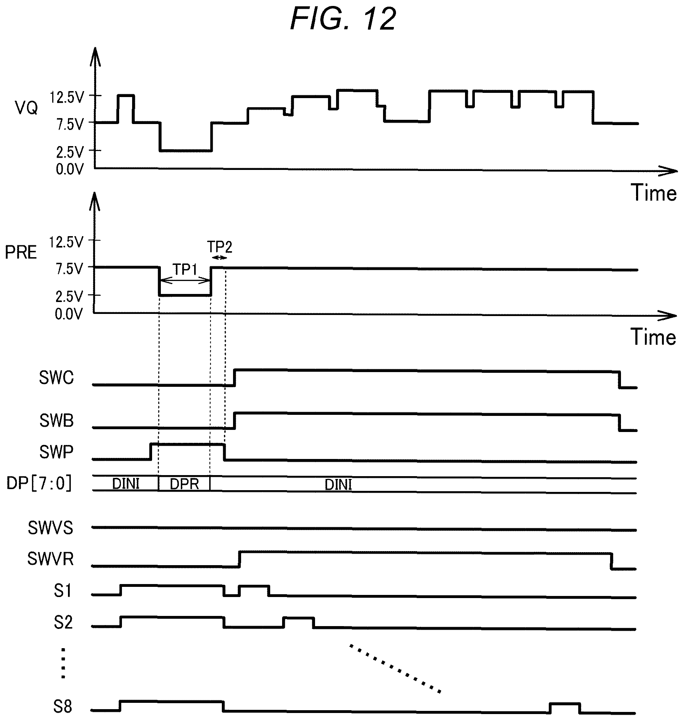

FIG. 12 is a second signal waveform example illustrating the operation of the driver 100 during the horizontal scanning period. Portions different from the first signal waveform example of FIG. 4 will be described. The processing circuit 42 outputs predetermined data DPR as the pre-charge data DP[7:0] during the first pre-charge period TP1. The processing circuit 42 sets the pre-charge data DP[7:0] to the initial value data DINI at the start of the second pre-charge period TP2. The processing circuit 42 turns off the initialization switch SWVS and turns on the initialization switch SWVR during the pixel drive period. Thereby, the pre-charge node voltage PRE is initialized to the common voltage VC = 7.5 V. It should be noted that the pre-charge node voltage PRE at the time of initialization is 7.5 V, the initial value data DINI and the predetermined data DPR can be determined by the same method as in FIG. 7.

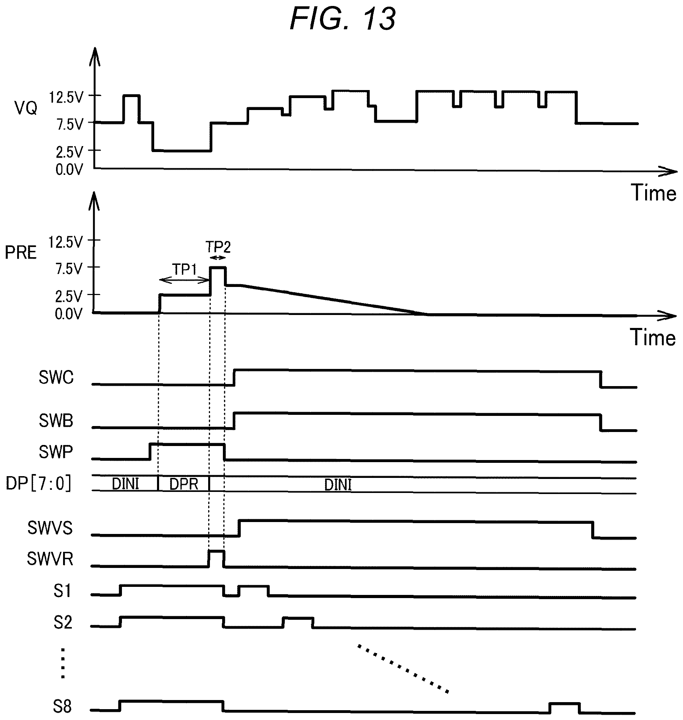

FIG. 13 is a third signal waveform example illustrating the operation of the driver 100 during the horizontal scanning period. Portions different from the first signal waveform example of FIG. 4 will be described. The processing circuit 42 outputs predetermined data DPR as the pre-charge data DP[7:0] during the first pre-charge period TP1. The processing circuit 42 sets the pre-charge data DP[7:0] to the initial value data DINI at the start of the second pre-charge period TP2, and turns on the initialization switch SWVR during the second pre-charge period TP2. Accordingly, since the common voltage VC = 7.5 V is supplied to the signal supply line or the like via the initialization switch SWVR, it is possible to accurately pre-charge to 7.5 V. The processing circuit 42 turns on the initialization switch SWVS and turns off the initialization switch SWVR during the pixel drive period. Thereby, the pre-charge node voltage PRE is initialized to 0 V. The initial value data DINI and the predetermined data DPR are the same as the initial value data DINI and the predetermined data DPR1 in FIG. 7.

In the present embodiment, the driver 100 includes the pixel drive circuit 50, the pre-charge switch SWP, the plurality of pre-charge capacitors CP1 to CP8, the pre-charge capacitor drive circuit 65, and the control circuit 40. The pixel drive circuit 50 drives the pixel PX of the electro-optical panel 200 via the output terminal TQj by the output voltage VQ corresponding to the gradation data GD[9:0]. One end of the pre-charge switch SWP is electrically coupled to the output terminal TQj. One end of each of the plurality of pre-charge capacitors CP1 to CP8 is electrically coupled to the other end of the pre-charge switch SWP. The pre-charge capacitor drive circuit 65 drives the other end of each pre-charge capacitor based on the pre-charge data DP[7:0]. The control circuit 40 outputs the pre-charge data DP[7:0] to the pre-charge capacitor drive circuit 65. During the pre-charge period during which the signal supply line and the plurality of data lines of the electro-optical panel 200 are pre-charged, the control circuit 40 turns on the pre-charge switch SWP and sets the pre-charge data DP[7:0] to the predetermined data in which the signal supply line becomes the pre-charge voltage. The "predetermined data in which the signal supply line becomes the pre-charge voltage" is the predetermined data DPR1 or the predetermined data DPR2 in the example of FIG. 4, and is the predetermined data DPR in the examples of FIGS. 12 and 13.

According to the present embodiment, during the pre-charge period, the pre-charge capacitors CP1 to CP8 are driven based on the predetermined data in which the signal supply line becomes the pre-charge voltage. Accordingly, the charge redistribution is performed between the pre-charge capacitors CP1 to CP8 and the capacitance on the panel side, and the signal supply line becomes the pre-charge voltage. By such pre-charge using the charge redistribution, the pre-charge can be performed at a higher speed than the pre-charge using an amplifier, a resistive divider circuit, or the like in the related art.

In the present embodiment, the pre-charge capacitor drive circuit 65 may output a low-level or high-level voltage to the other end of each pre-charge capacitor based on the pre-charge data DP[7:0]. The predetermined data may be data that causes the high-level voltage to be output to the other ends of at least some of the plurality of pre-charge capacitors CP1 to CP8.

According to the present embodiment, during the pre-charge period, the other ends of at least some of the pre-charge capacitors are coupled to the node of the high level, that is, the node of the power supply voltage. Accordingly, at least a part of the charge transferred in the charge redistribution can flow to the power supply node instead of the ground node, and noise of the ground voltage in the pre-charge can be reduced. Since the pre-charge is performed within a limited time, high-speed charge transfer is required, and large noise is generated in the ground voltage, but according to the present embodiment, the noise of the ground voltage is reduced.

In the present embodiment, the pre-charge capacitor drive circuit 65 may output the low-level or high-level voltage to the other end of each pre-charge capacitor based on the pre-charge data DP[7:0]. The control circuit 40 may set the pre-charge data DP[7:0] to the predetermined data from the initial value data DINI after turning on the pre-charge switch SWP in a state where the pre-charge data DP[7:0] is set to the initial value data DINI. The initial value data DINI may be data that causes the high-level voltage to be output to the other ends of at least some of the plurality of pre-charge capacitors CP1 to CP8.

According to the present embodiment, the noise of the ground voltage in the pre-charge can be reduced for the same reason as described above.

In the present embodiment, the driver 100 may include an initialization switch. The initialization switch may be provided between one end of each of the plurality of pre-charge capacitors CP1 to CP8 and an input node of an initialization voltage. The control circuit 40 may initialize the one end of each of the plurality of pre-charge capacitors CP1 to CP8 with the initialization voltage by turning on the initialization switch before the pre-charge period.

In the present embodiment, the initialization voltage may be the ground voltage, the common voltage for driving the electro-optical panel 200, the power supply voltage, or the reference voltage. The initialization switch and the initialization voltage are the initialization switch SWVS and the ground voltage in the examples of FIGS. 3 and 10, and the initialization switch SWVS and the ground voltage or the initialization switch SWVR and the common voltage VC in the example of FIG. 11. As described with reference to FIG. 11, the power supply voltage or the reference voltage may be input to the initialization switch SWVR.

According to the present embodiment, the voltage of the one end of each of the plurality of pre-charge capacitors CP1 to CP8 is initialized before the pre-charge period. Then, during the pre-charge period, the other end of each of the plurality of pre-charge capacitors CP1 to CP8 is driven based on the predetermined data, so that the signal supply line becomes the pre-charge voltage. Further, rather than during the pre-charge period having a limited length, the charge of the pre-charge capacitors CP1 to CP8 can be initialized before the pre-charge period. This makes it possible to perform the initialization over a longer time than the pre-charge period. For example, when the initialization voltage is the ground voltage, noise may occur in the ground voltage due to charge transfer in the initialization. In this regard, the noise of the ground voltage is reduced by performing the initialization over a long time.

In the present embodiment, the control circuit 40 may turn on the initialization switch during the pixel drive period.

According to the present embodiment, the initialization is performed during the pixel drive period longer than the pre-charge period. For example, even when the initialization voltage is the ground voltage, the noise of the ground voltage is reduced by performing the initialization over a long time.

In the present embodiment, the control circuit 40 may set the pre-charge data DP[7:0] to the initial value data DINI during a period during which the initialization switch is turned on. The control circuit 40 may set the pre-charge data DP[7:0] to the predetermined data during the pre-charge period.

According to the present embodiment, during the pre-charge period, the charge corresponding to the difference between the initial value data DINI and the predetermined data is supplied from the pre-charge capacitors CP1 to CP8 to the signal supply line. As a result, the signal supply line becomes the pre-charge voltage by the charge redistribution.

In the present embodiment, the driver 100 may include the diode DIP. A cathode of the diode DIP may be coupled to one end of each of the plurality of pre-charge capacitors CP1 to CP8, and an anode thereof may be coupled to the input node of the initialization voltage which is a ground voltage.

When the pre-charge data DP[7:0] changes in a direction in which charge is discharged from the signal supply line to the pre-charge capacitors CP1 to CP8, the voltage at one end of each of the pre-charge capacitors CP1 to CP8 may become lower than the ground voltage. When the voltage drop exceeds a withstand voltage, the pre-charge circuit 60 or the pre-charge switch SWP may fail. According to the present embodiment, since the voltage drop described above is clamped by the diode DIP, a failure can be prevented.

In the present embodiment, the pixel drive circuit 50 may include the first to n-th capacitors CD1 to CDn and the capacitor drive circuit 20. n is an integer of 2 or more. The first to n-th capacitors CD1 to CDn may be provided between the output terminal TQj and the first to n-th capacitor drive nodes NDR1 to NDRn. The capacitor drive circuit 20 may output the first to n-th capacitor drive voltages corresponding to the capacitive drive data DTH[11:0] output by the control circuit 40 based on the gradation data GD[9:0] to the first to n-th capacitor drive nodes NDR1 to NDRn.

According to the present embodiment, the data voltage corresponding to the gradation data GD[9:0] is written to the pixel by performing the charge redistribution between the first to n-th capacitors CD1 to CDn driven by the capacitor drive circuit 20 and the capacitance on the panel side. By driving the pixel by the charge redistribution, high-speed writing becomes possible as compared with driving by an amplifier or the like. The power consumption of the driver 100 can be reduced, or a chip size of the driver 100 can be reduced.

In the present embodiment, the electro-optical device 400 includes the driver 100 described above and the electro-optical panel 200.

### 3. Charge Error due to Pixel Capacitance and Correction

FIG. 14 is a diagram illustrating a charge error due to the pixel capacitance. Hereinafter, the data lines DLj1 to DLj8 coupled to the switches SWj1 to SWj8 of FIG. 5, the scanning line GL1, and the pixels PX coupled thereto will be described as an example. In addition, a case where the previous frame is driven by the negative polarity and the current frame is driven by the positive polarity will be described as an example.

As illustrated in a left diagram of FIG. 14, when the negative polarity driving ends in the previous frame under the negative polarity driving, all the pixels PX coupled to the scanning line GL1 hold the negative data voltage. The negative data voltage is a voltage equal to or lower than the common voltage VC. As illustrated in a central diagram and a right diagram of FIG. 14, during the horizontal scanning period of the current frame under the positive polarity driving, the positive data voltage is written to a first pixel, then the positive data voltage is written to a second pixel, and thereafter the positive data voltage is sequentially written to an eighth pixel in the same manner. The positive data voltage is a voltage equal to or higher than the common voltage VC.

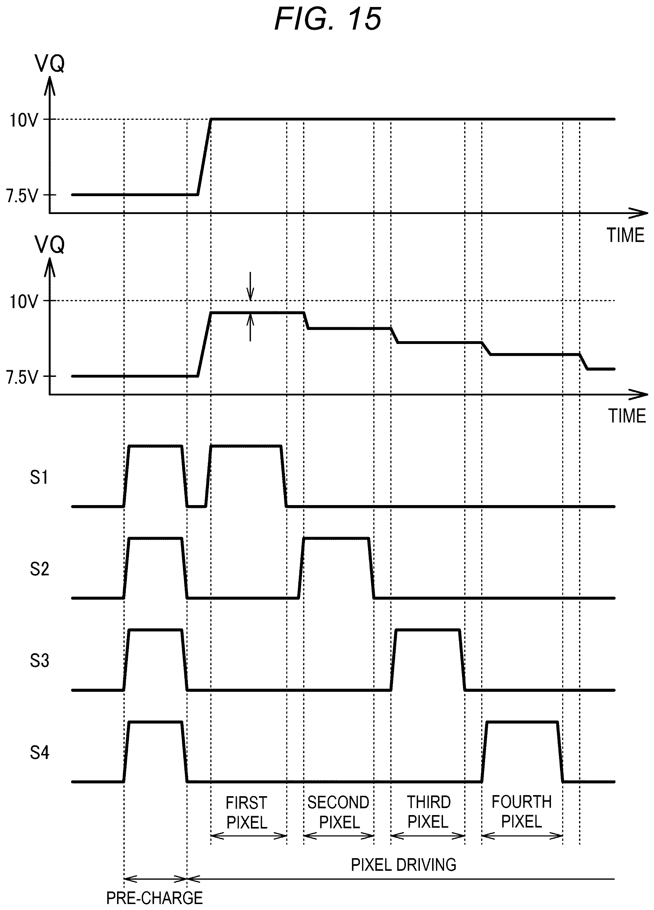

FIG. 15 is a signal waveform example in the current frame under the positive polarity driving. Here, a waveform example until the fourth pixel of the demultiplex driving is driven during the horizontal scanning period is illustrated. A control signal of the demultiplexer DMj also illustrates waveforms of S1 to S4. When the control signal is at a high level, the switch is on. The target voltage is assumed to be 10 V for all pixels.

During the pre-charge period, the switches SWj1 to SWj8 of the demultiplexer are all turned on, and the data lines DLj1 to DLj8 are pre-charged by the common voltage VC = 7.5 V supplied from the outside.

During the pixel drive period, the switch SWj1 is turned on by the control signal S1, and the data voltage 10 V is written to the pixel of the data line DLj1. A first diagram from the top of FIG. 15 illustrates an example of a waveform of an ideal output voltage VQ when there is no charge error. When there is no charge error, the output voltage VQ becomes the target voltage 10 V, and 10 V is also written to the pixel.

However, as described in the left diagram of FIG. 14, the negative data voltage is held in the pixel capacitance in the previous frame. Therefore, when writing to the pixel is performed as in the central diagram of FIG. 14, the pixel transistor is turned on, the pixel capacitance is coupled to the data line, and the negative charge accumulated in the pixel capacitance is supplied to the data line DLj1. In the capacitive driving, when charge storage is established at the output node NVQ of the output circuit DDj, a target voltage corresponding to the capacitive drive data DTH[11:0] is output. Therefore, the negative charge from the pixel capacitance as described above becomes an error, and the output voltage VQ becomes lower than the target voltage 10 V as illustrated in a second diagram of FIG. 15. As described above, since the charge error is supplied from the pixel capacitance across frames, the data voltage has an error with respect to the target voltage. The voltage error is about several gradations to 10 gradations at the maximum when converted into a gradation value. As illustrated in the second diagram of FIG. 15, as the demultiplex driving proceeds to the second pixel, the third pixel, the fourth pixel, ..., errors are accumulated, and the output voltage VQ becomes lower than the target voltage 10 V. In the frame of the negative polarity driving, since positive charge is supplied from the pixel capacitance, an error occurs in a direction in which the output voltage VQ becomes higher than the target voltage.

There is a problem that the gradation error described above affects display quality, or it is necessary to provide an amplifier circuit in the output circuit DDj or increase a charge supply capability of the amplifier circuit in order to absorb the charge error. iWhen the amplifier circuit is provided, power consumption or a circuit area increases. Further, even on the premise that the amplifier circuit is provided, it is desirable that the charge error is small from the viewpoint of reducing the power consumption or the circuit area.

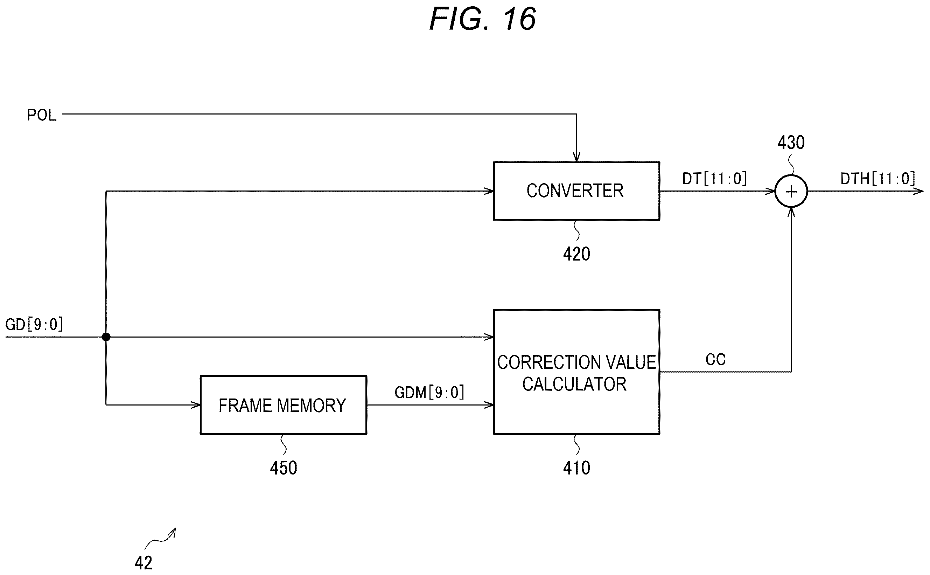

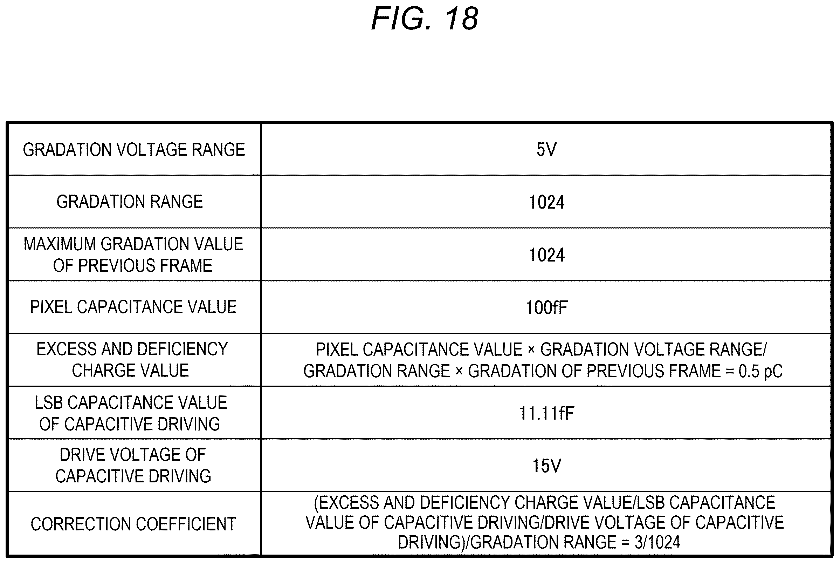

FIG. 16 is a detailed configuration example of the processing circuit 42 when the driver 100 performs the correction processing. The processing circuit 42 includes a correction value calculator 410, a converter 420, an addition unit 430, and a frame memory 450. Here, an example in which correction is performed using the gradation data of the previous frame and the current frame will be described, but the correction processing is not limited thereto. For example, the gradation data of the current frame may be used instead of the gradation data of the previous frame. In this case, the frame memory 450 may be omitted, and the calculation may be performed using the gradation data of the current frame instead of the gradation data of the previous frame in calculation examples in FIG. 18 and subsequent figures.

The processing circuit 42 calculates correction data CC for correcting the data voltage error due to the charge error using the gradation data GD[9:0] of the previous frame. Specifically, the frame memory 450 stores the gradation data GD[9:0] of one frame. The frame memory 450 is, for example, a semiconductor memory such as a DRAM or an SRAM. The correction value calculator 410 reads the gradation data of the previous frame from the frame memory 450 for the target pixel for which the correction data CC is to be calculated. This gradation data is referred to as GDM[9:0]. The correction value calculator 410 calculates the correction data CC for correcting the data voltage error due to the charge error described above using the gradation data GD[9:0] of the target pixel and the gradation data GDM[9:0] of the previous frame. The number of bits of the correction data CC may be any and may be appropriately set according to the maximum value of the correction value. The converter 420 converts the gradation data GD[9:0] into gradation data DT[11:0] for capacitive driving based on a polarity signal POL. The polarity signal POL is a signal indicating whether the driving is the positive polarity driving or the negative polarity driving. The addition unit 430 adds the correction data CC to the gradation data DT[11:0] and outputs the addition result as the capacitive drive data DTH[11:0].

According to the present embodiment, although the data voltage error occurs in the current frame due to the charge accumulated in the pixel in the previous frame, the error between the target voltage and the data voltage can be reduced by correcting the data voltage error by the correction data CC. When the voltage error is ideally corrected, the data voltage coincides with the target voltage as illustrated in the first diagram of FIG. 15. Alternatively, even when the data voltage does not completely match the target voltage, the error between the target voltage and the data voltage as illustrated in the second diagram of FIG. 15 can be reduced by correction. Since the data voltage error can be reduced in this manner, the amplifier circuit can be omitted from the output circuit DDj. Alternatively, even when the amplifier circuit is provided in the output circuit DDj, it is possible to increase a degree of freedom in design such as saving the power consumption or the circuit area of the amplifier circuit or creating the amplifier circuit by a low withstand voltage process.

FIG. 17 is a diagram illustrating conversion performed by the converter 420. When the polarity signal POL indicates the positive polarity driving, the converter 420 converts the gradation data GD[9:0] into the gradation data DT[11:0] by DT[11:0] = GD[9:0] + 800h. When the polarity signal POL indicates the negative polarity driving, the converter 420 converts the gradation data GD[9:0] into the gradation data DT[11:0] by DT[11:0] = 7FFh - GD[9:0]. When the data voltage error due to the capacitance error does not occur, DT[11:0] = BFFh, 800h, and 400h correspond to the output voltages VQ = 12.5 V, 7.5 V, and 2.5 V by the capacitive driving, respectively. A range of the gradation data DT[11:0] output by the converter 420 is 400h to BFFh, and the gradation data DT[11:0] includes 000h to FFFh. 000h to 3FFh and C00h to FFFh are provided in order to prevent an overflow of the capacitive drive data DTH[11:0] even when correction or the like is performed. For example, in the present embodiment, even when the correction data CC is added, the capacitive drive data DTH[11:0] does not overflow.

The charge error due to the pixel capacitance described above is negative in the positive polarity driving and positive in the negative polarity driving. Therefore, the correction is performed in a direction of increasing the gradation value in the positive polarity driving and in a direction of decreasing the gradation value in the negative polarity driving. Such correction is equivalent to adding the positive correction data CC to the converted gradation data DT[11:0]. That is, referring to FIG. 17, adding the positive correction data CC to the gradation data DT[11:0] is equivalent to increasing the gradation value of the gradation data GD[9:0] in the positive polarity driving, and is equivalent to decreasing the gradation value of the gradation data GD[9:0] in the negative polarity driving. Therefore, in the configuration example of FIG. 16, the correction data CC is a positive value, and the correction is realized by adding the correction data CC to the converted gradation data DT[11:0].

FIGS. 18 to 21 are specific calculation examples of correction. FIG. 18 illustrates a calculation example of the correction coefficient. The correction coefficient is a coefficient used for calculating the correction data CC.

A gradation voltage range is 5 V, a gradation range is 1024, the maximum gradation value of the previous frame is 1024, and the pixel capacitance value is 100 fF. The gradation voltage range is the data voltage amplitude in each of the positive polarity driving and the negative polarity driving. As described with reference to FIG. 17, the positive polarity driving has a 5V amplitude from 7.5 V to 12.5 V, and the negative polarity driving has a 5V amplitude from 7.5 V to 2.5 V. The gradation range is a range of the gradation data GD[9:0]. Since the gradation data GD[9:0] is from 0 to 1023, the range is 1024 gradations. The pixel capacitance value is a capacitance value of a pixel capacitance provided in one pixel.

An excess and deficiency charge value is the pixel capacitance value × the gradation voltage range/the gradation range × the gradation value of the previous frame. When the previous frame has a maximum gradation value of 1024, the excess and deficiency charge value is 100 fF × 5 V/1024 × 1024 = 0.5 pC. The LSB capacitance value of the capacitive driving, that is, the capacitance value of the capacitor CD1 is 11.11 fF. The drive voltage of the capacitive driving, that is, the power supply voltages of the drive circuits DR1 to DR12 are each 15 V. At this time, the correction coefficient is (the excess and deficiency charge value/the LSB capacitance value of the capacitive driving/the drive voltage of the capacitive driving)/the gradation range = (0.5 pC/11.11 fF/15 V)/1024 = 3/1024. That is, in this example, the maximum value of the data voltage error corresponds to three gradations.

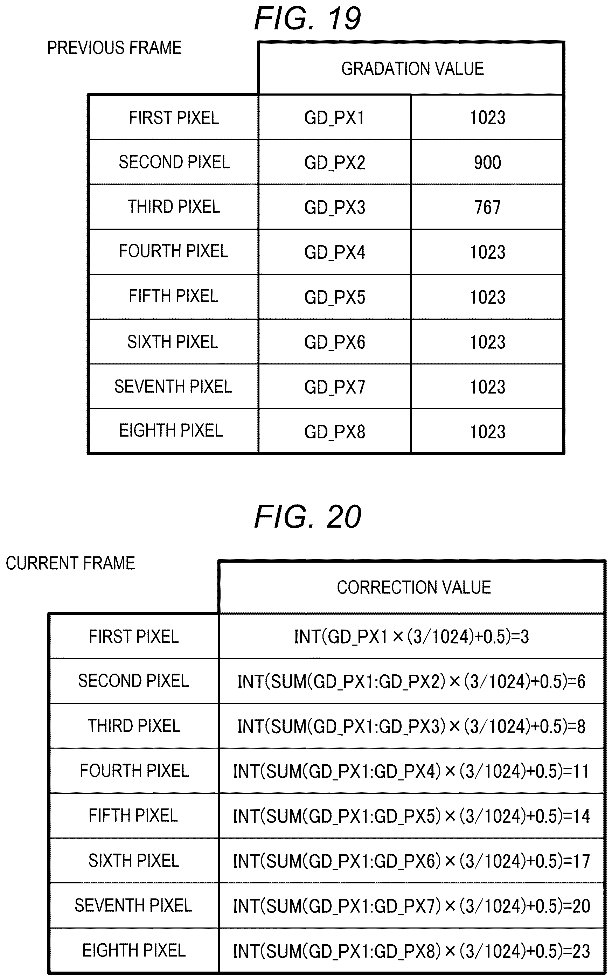

FIG. 19 illustrates an example of gradation values of the gradation data GD[9:0] in the previous frame. The gradation data GD[9:0] corresponding to the first pixel to the eighth pixel sequentially driven in the demultiplex driving is set as GD_PX1 to GD_PX8. The value of each gradation data is as illustrated in FIG. 19.

FIG. 20 is a calculation example of the correction value in the current frame. The correction value is a value of the correction data CC. INT() is a function that outputs an integer value by rounding off a decimal part of a real number in (). 3/1024 is a correction coefficient. 0.5 is added to round up the decimal part. When q is an integer of 2 or more and 8 or less, SUM(GD_PX1:GD_PXq) indicates an integrated value from GD_PX1 to GD_PXq. Since the charge errors of the second and subsequent pixels are accumulated, the correction data CC is calculated using SUM(GD_PX1:GD_PXq).

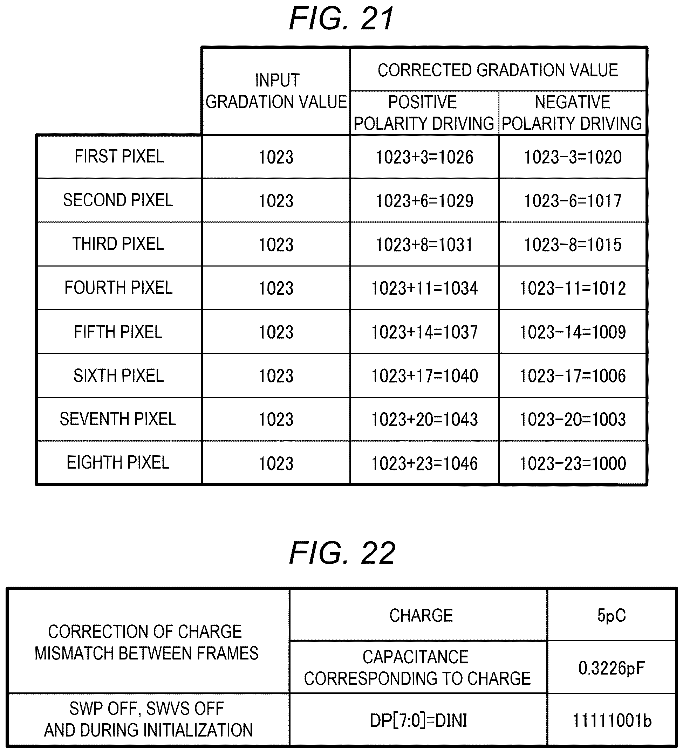

FIG. 21 is an example of gradation values corrected by the correction data CC in the current frame. The input gradation value means the gradation value of the gradation data GD[9:0], and is assumed to be 1023 in all of the first to eighth pixels. The corrected gradation value is a gradation value corrected by the correction data CC, and here, it is assumed that the gradation data GD[9:0] is corrected. When the current frame is driven by the positive polarity, the charge error becomes negative because the previous frame is driven by the negative polarity, and a correction value is added to the input gradation value to correct the charge error. When the current frame is driven by the negative polarity, the charge error becomes positive because the previous frame is driven by the positive polarity, and the correction value is subtracted from the input gradation value to correct the charge error.

FIG. 22 is a diagram illustrating the pre-charge when correcting the charge error due to the pixel capacitance described above.

As described with reference to FIG. 18, due to the data voltage of the pixel of the previous frame, the excess and deficiency charge of the capacitive driving occurs. In the example of FIG. 18, the maximum is 0.5 pC per pixel, and when the number of demultiplexes is eight, the excess and deficiency charge of 4 pC at the maximum is generated in eight pixels per line. This excess and deficiency charge is compensated by the gradation data correction described in FIGS. 20 and 21, and the correction value per line is a small value of about 23 illustrated in FIG. 20. However, when no charge is supplied from the amplifier or the outside, the excess and deficiency charge is accumulated for each line, and the correction value is also accumulated, so that the correction value becomes a large value in one frame. For example, when one frame has 1080 lines, the correction value is (the correction value 23 of one line) × (1080 lines).

Therefore, in the present embodiment, the excess and deficiency charge is compensated using the pre-charge circuit 60 described with reference to FIG. 3 and the like. This compensation may be performed for any number of lines. Here, an example of compensating for the excess and deficiency charge in each line will be described.

FIG. 22 is a diagram illustrating the compensation of the excess and deficiency charge using the pre-charge circuit 60. The excess and deficiency charge of one line is obtained, for example, by adding the excess and deficiency charge for eight pixels of one line. Alternatively, the excess and deficiency charge of one line is obtained by calculating back from the correction value 23 for an eighth pixel illustrated in FIG. 20. In the example of FIG. 22, the excess and deficiency charge of one line is 5 pC. When the power supply voltage is 15.5 V, the capacitance to be moved by the pre-charge circuit 60 corresponding to the excess and deficiency charge is 5 pC/15.5 V = 0.3226 pF. In the example of FIG. 6, 0.3226 pF substantially corresponds to CP2 + CP3. In the initialization of the pre-charge circuit 60, when the charge is accumulated in CP2 + CP3, the charge is supplied to the signal supply line during the pixel drive period or the like, so that the excess and deficiency charge is compensated.

Specifically, the control circuit 40 turns off the pre-charge switch SWP and turns on the initialization switch SWVS at the time of initialization, and outputs the initial value data DINI = 11111001b as the pre-charge data DP[7:0]. As a result, the pre-charge capacitors CP2 and CP3 accumulate more charge by the excess and deficiency charge than in the case of the initial value data DINI = 11111111b. Other operations are the same as those in FIG. 7 except that DINI = 11111001b. For example, at the time of the pre-charge of 7.5 V, since DP[7:0] = DPR2 = 11111111b, extra charge is supplied to the signal supply line or the like by a difference between DINI = 11111001b and DPR2 = 11111111b. As a result, during the pixel drive period after the pre-charge, the pixel is driven in a state where the excess and deficiency charge of the previous line is compensated. Since the excess and deficiency charge is compensated, the correction value may be reset for each line and is not accumulated for each line, and thus the correction value does not increase in one frame.

Note that the above is an example of a case where the excess and deficiency charge is 5 pC, but since the excess and deficiency charge actually changes for each line, the initial value data DINI changes accordingly.

In the present embodiment, in the polarity inversion driving of the electro-optical panel 200, the control circuit 40 may output, to the capacitor drive circuit 20, the capacitive drive data DTH[n-1:0] generated by addition processing of the correction data CC according to reference gradation data which is the gradation data of the previous frame or the current frame and the gradation data GD[9:0] of the current frame.

In the present embodiment, the correction data CC may be data for correcting the excess and deficiency charge in the current frame caused by charge held in a pixel in the previous frame.

As described with reference to FIGS. 14 and 15, the data voltage error occurs in the current frame due to the charge accumulated in the pixel in the previous frame. According to the present embodiment, the error between the target voltage and the data voltage can be reduced by correcting the data voltage error with the correction data CC corresponding to the reference gradation data. That is, when the gradation data of the previous frame is used as the reference gradation data, it is possible to know the charge accumulated in the pixel in the previous frame from the gradation data of the previous frame, and to calculate the correction data CC for correcting the error. Even when the gradation data of the current frame is used as the reference gradation data, it is possible to estimate the charge accumulated in the pixel in the previous frame by regarding the gradation data of the current frame as the gradation data of the previous frame. Since the data voltage error can be corrected as described above, the amplifier circuit can be omitted from the output circuit DDj. Alternatively, even when the amplifier circuit is provided in the output circuit DDj, it is possible to increase the degree of freedom in design such as saving the power consumption or the circuit area of the amplifier circuit or creating the amplifier circuit by a low withstand voltage process.

In the present embodiment, the driver 100 may include an initialization switch. The initialization switch may be provided between one end of each of the plurality of pre-charge capacitors CP1 to CP8 and an input node of an initialization voltage. The control circuit 40 may initialize one end of each of the plurality of pre-charge capacitors CP1 to CP8 with the initialization voltage by turning on the initialization switch and setting the pre-charge data DP[7:0] to the initial value data DINI before the pre-charge period. The initial value data DINI and the predetermined data may be set such that the excess and deficiency charge is compensated when the pre-charge data DP[7:0] is set to the predetermined data during the pre-charge period. The initialization switch and the initialization voltage are the initialization switch SWVS and the ground voltage in the examples of FIGS. 3 and 10, and the initialization switch SWVS and the ground voltage or the initialization switch SWVR and the common voltage VC in the example of FIG. 11. As described with reference to FIG. 11, the power supply voltage or the reference voltage may be input to the initialization switch SWVR.

As described above, when a pixel is driven, the excess and deficiency charge occurs due to the data voltage of the pixel of the previous frame, and the excess and deficiency is accumulated for each line. In this regard, according to the present embodiment, the pre-charge circuit 60 can compensate for the excess and deficiency charge. Thereby, the accumulation of the excess and deficiency charge is reset at a timing when the pre-charge circuit 60 compensates the excess and deficiency charge.

### 4. Electronic Apparatus

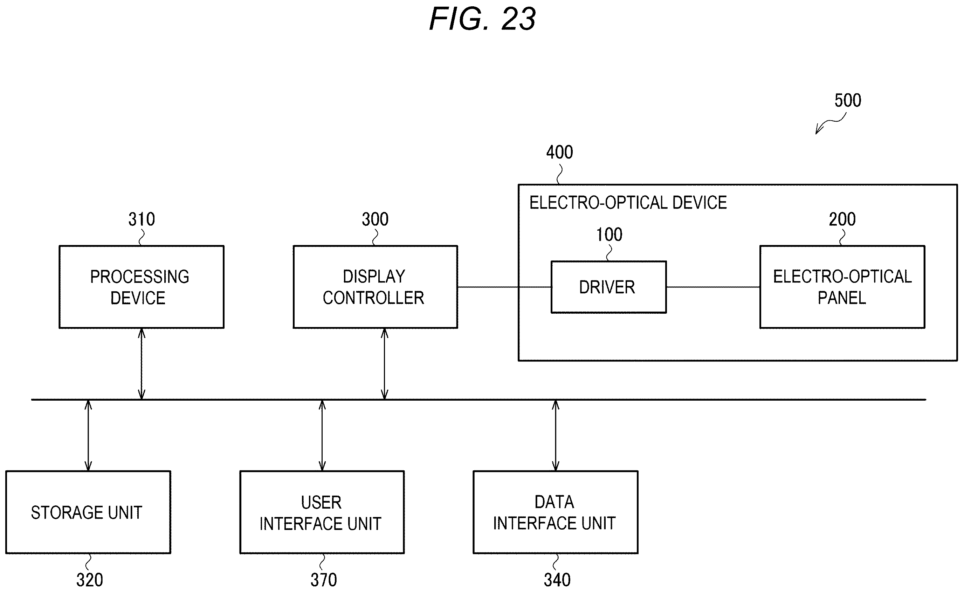

FIG. 23 is a configuration example of an electronic apparatus 500 including the driver 100. As the electronic apparatus 500, various electronic apparatuses equipped with a display device are assumed. For example, the electronic apparatus 500 is a projector, a television device, an information processing device, a portable information terminal, a car navigation system, a portable game terminal, or the like.

The electronic apparatus 500 includes the electro-optical device 400, a display controller 300, a processing device 310, a storage unit 320, a user interface unit 330, and a data interface unit 340. The electro-optical device 400 includes the driver 100 and the electro-optical panel 200.

The user interface unit 330 is an interface unit that receives various operations from a user. The user interface unit 330 includes, for example, a button, a mouse, a keyboard, or a touch panel mounted on the electro-optical panel 200. The data interface unit 340 is an interface unit that inputs and outputs image data or control data. The data interface unit 340 is, for example, a wired communication interface such as a USB or a wireless communication interface such as a wireless LAN. The storage unit 320 stores the image data input from the data interface unit 340. Alternatively, the storage unit 320 functions as a working memory of the processing device 310 or the display controller 300. The processing device 310 performs control processing of each unit of the electronic apparatus and various data processing. The processing device 310 is, for example, a processor such as a CPU or a microcomputer. The display controller 300 performs control processing of the driver 100. For example, the display controller 300 converts image data transferred from the data interface unit 340 or the storage unit 320 into a format that can be received by the driver 100, and outputs the converted image data to the driver 100. The driver 100 drives the electro-optical panel 200 based on the image data transferred from the display controller 300.

While the present embodiment has been described in detail above, a person skilled in the art could readily understand that many modifications can be made without substantively departing from the novel matters and effects of the present disclosure. Therefore, all such modifications should fall within the scope of the present disclosure. For example, a term described at least once together with a different term having a broader meaning or the same meaning in the specification or the drawings can be replaced with the different term in any part of the specification or the drawings. All combinations of the present embodiment and the modifications also fall within the scope of the present disclosure. The configurations, operations, and the like of the control circuit, the output circuit, the driver, the electro-optical panel, the electro-optical device, the display driver, the electronic apparatus, and the like are not limited to those described in the present embodiment, and various modifications can be made.

## Claims

1. A driver comprising:
a pixel drive circuit configured to drive a pixel of an electro-optical panel by an output voltage corresponding to gradation data via an output terminal;
a pre-charge switch having one end electrically coupled to the output terminal;
a plurality of pre-charge capacitors, each having one end electrically coupled to the other end of the pre-charge switch;
a pre-charge capacitor drive circuit configured to drive the other end of each of the pre-charge capacitors based on pre-charge data; and
a control circuit configured to output the pre-charge data to the pre-charge capacitor drive circuit, wherein
during a pre-charge period during which a signal supply line and a plurality of data lines of the electro-optical panel are pre-charged, the control circuit turns on the pre-charge switch, and sets the pre-charge data to predetermined data in which the signal supply line becomes a pre-charge voltage.

2. The driver according to claim 1, wherein
the pre-charge capacitor drive circuit outputs a low-level or high-level voltage to the other end of each of the pre-charge capacitors based on the pre-charge data, and
the predetermined data is data that causes the high-level voltage to be output to the other ends of at least some of the plurality of pre-charge capacitors.

3. The driver according to claim 1, wherein
the pre-charge capacitor drive circuit outputs a low-level or high-level voltage to the other end of each of the pre-charge capacitors based on the pre-charge data,
the control circuit turns on the pre-charge switch in a state where the pre-charge data is set to initial value data, and then sets the pre-charge data from the initial value data to the predetermined data, and
the initial value data is data that causes the high-level voltage to be output to the other ends of at least some of the plurality of pre-charge capacitors.

4. The driver according to claim 1, further comprising
an initialization switch provided between the one end of each of the plurality of pre-charge capacitors and an input node of an initialization voltage, wherein
the control circuit initializes the one end of each of the plurality of pre-charge capacitors with the initialization voltage by turning on the initialization switch before the pre-charge period.

5. The driver according to claim 4, wherein
the initialization voltage is a ground voltage, a common voltage for driving the electro-optical panel, a power supply voltage, or a reference voltage.

6. The driver according to claim 4, wherein
the control circuit turns on the initialization switch during a pixel drive period.

7. The driver according to claim 4, wherein
the control circuit
sets the pre-charge data to initial value data during a period during which the initialization switch is turned on, and
sets the pre-charge data to the predetermined data during the pre-charge period.

8. The driver according to claim 4, further comprising
a diode having a cathode coupled to the one end of each of the plurality of pre-charge capacitors and an anode coupled to an input node of the initialization voltage which is a ground voltage.

9. The driver according to claim 1, wherein
the pixel drive circuit includes
first to n-th capacitors that are respectively provided between the output terminal and first to n-th capacitor drive nodes, n being an integer of 2 or more, and
a capacitor drive circuit that outputs first to n-th capacitor drive voltages corresponding to capacitive drive data output by the control circuit based on the gradation data to the first to n-th capacitor drive nodes.

10. The driver according to claim 9, wherein
in polarity inversion driving of the electro-optical panel, the control circuit outputs, to the capacitor drive circuit, the capacitive drive data generated by addition processing of correction data according to reference gradation data which is gradation data of a previous frame or a current frame and the gradation data of the current frame.

11. The driver according to claim 10, wherein
the correction data is data for correcting excess and deficiency charge in the current frame caused by charge held in a pixel in the previous frame.

12. The driver according to claim 11, further comprising
an initialization switch provided between the one end of each of the plurality of pre-charge capacitors and an input node of an initialization voltage, wherein
the control circuit initializes the one end of each of the plurality of pre-charge capacitors with the initialization voltage by turning on the initialization switch and setting the pre-charge data to initial value data before the pre-charge period, and
the initial value data and the predetermined data are set such that the excess and deficiency charge is compensated when the pre-charge data is set to the predetermined data during the pre-charge period.

13. An electro-optical device comprising:
the driver according to claim 1; and
the electro-optical panel.
